# EUROPÄISCHE PATENTANMELDUNG

(11) **EP 1 335 463 A2**
(43) Veröffentlichungstag der Anmeldung: **13.08.2003**
(21) Anmeldenummer: 03002470.7
(22) Anmeldetag: 05.02.2003
(51) Int. Cl.: H02G 3/30

(54) **Positioniereinrichtung**

(30) Priorität: 08.02.2002 DE 10205328
(71) Anmelder: Delphi Technologies, Inc., Troy, MI 48007 (US)
(72) Erfinder: Hegedüs, Laszlo, 42389 Wuppertal (DE); Rudack, Ulrich, 58452 Witten (DE)
(74) Vertreter: Manitz, Finsterwald & Partner GbR

(57) **Zusammenfassung**

Die Erfindung betrifft eine Positioniereinrichtung für Leitungen in Kabelsätzen, insbesondere für elektrische Leitungen in Kabelsätzen für Kraftfahrzeuge, mit wenigstens einem an einem Kabelsatz fixierbaren Träger, der zumindest eine Halteeinrichtung aufweist, mit der wenigstens eine zwischen mehreren Leitungen des Kabelsatzes hergestellte Verbindungsstelle in einer vorgegebenen Position am Träger fixierbar ist. Die Erfindung betrifft außerdem ein Verfahren zum Abdichten von Verbindungsstellen, die jeweils zwischen mehreren Leitungen eines Kabelsatzes hergestellt werden.

## Beschreibung

Die Erfindung betrifft eine Positioniereinrichtung für Leitungen in Kabelsätzen. Die Erfindung betrifft ferner ein Verfahren zum Abdichten von Verbindungsstellen, die jeweils zwischen mehreren Leitungen eines Kabelsatzes hergestellt werden.

Insbesondere bei der Herstellung von Kraftfahrzeugen werden elektrische Leitungen, die zur Stromversorgung von Bauteilen sowie zur Signalübertragung dienen, als Kabelsätze oder Kabelbäume verlegt, in denen eine Vielzahl von elektrischen Leitungen zu einem Bündel zusammengefasst sind. Um bestimmte Signale oder elektrische Potentiale an unterschiedlichen Orten im Kraftfahrzeug zur Verfügung zu stellen, ist es erforderlich, dass mehrere Leitungen des Kabelsatzes miteinander verbunden werden und an bestimmten Positionen längs des Kabelsatzes Leitungen jeweils vom Kabelsatz weggeführt oder in den Kabelsatz aufgenommen werden. Beispielsweise wird ein die Fahrzeuggeschwindigkeit repräsentierendes Signal, das an einem Ort im Fahrzeug erzeugt wird, an mehreren räumlich voneinander getrennten Orten im Fahrzeug benötigt. Hierzu muss die das Geschwindigkeitssignal führende Leitung zum einen in den Fahrzeugkabelsatz eingegliedert und zum anderen mit einer oder mehreren Leitungen verbunden werden, die jeweils an einer entfernten Position vom Kabelsatz abzweigen, um das Signal dem jeweiligen Bauteil zuzuführen. Eine Verbindungsstelle, an der zwei oder mehr Leitungen miteinander verbunden werden, wird auch als "splice" bezeichnet.

Da Kabelsätze auch in Nassbereichen wie beispielsweise dem Motorraum eines Fahrzeugs verlegt werden müssen, kommt der Abdichtung der Verbindungsstellen zwischen den Leitungen eine besondere Bedeutung zu. Bekannte Lösungen, die spezielle Abdichtröhren, Schrumpfschläuche oder einfach handelsübliche Klebebänder zum Abdichten der Verbindungsstellen verwenden, sind zeitaufwändig und kostenintensiv, da sie zum einen mit einem hohen Materialverbrauch verbunden sind und zum anderen jede einzelne Verbindungsstelle getrennt von den anderen Verbindungsstellen abgedichtet werden muss. Ferner ist bei den bekannten Lösungen von Nachteil, dass die Relativpositionen der einzelnen Verbindungsstellen undefiniert sind und die gegenseitige Isolierung der Verbindungsstellen nicht mit ausreichender Zuverlässigkeit sichergestellt werden kann, was insgesamt zu einer geringen Prozesssicherheit sowie dazu führt, dass auch aufgrund der schwierigen Handhabung der bekannten Lösungen bei der Montage von Kabelsätzen ein hoher Aufwand betrieben werden muss.

Aufgabe der Erfindung ist es, eine Möglichkeit zu schaffen, die Herstellung von Kabelsätzen und insbesondere die Abdichtung von Verbindungsstellen zwischen mehreren Leitungen des Kabelsatzes zu vereinfachen, wobei insbesondere ein möglichst hohes Maß an Prozesssicherheit gewährleistet sein soll und die Herstellungs- und Montagekosten minimiert werden sollen.

Die Lösung dieser Aufgabe erfolgt zum einen durch die Merkmale des unabhängigen Vorrichtungsanspruchs 1 und insbesondere dadurch, dass die Positioniereinrichtung wenigstens einen an einem Kabelsatz fixierbaren Träger umfasst, der zumindest eine Halteeinrichtung aufweist, mit der wenigstens eine zwischen mehreren Leitungen des Kabelsatzes hergestellte Verbindungsstelle in einer vorgegebenen Position am Träger fixierbar ist.

Die Erfindung stellt eine Positioniereinrichtung bereit, mit der die einzelnen Verbindungsstellen jeweils in einer vorgegebenen Position relativ zum Kabelsatz fixiert werden können, indem der Träger der Positioniereinrichtung am Kabelsatz befestigt und die zu positionierende Verbindungsstelle an der Halteeinrichtung des Trägers fixiert wird.

Von besonderem Vorteil ist, dass erfindungsgemäß die Positionierung des Trägers und damit der Verbindungsstellen ohne zusätzliche Befestigungsmittel alleine unter Verwendung der erfindungsgemäßen Positioniereinrichtung möglich ist.

Vorzugsweise weist der Träger mehrere Halteeinrichtungen auf, die gegeneinander isoliert und insbesondere räumlich voneinander getrennt sind. Auf diese Weise können mit lediglich einer Vorrichtung mehrere Verbindungsstellen in definierten Relativpositionen zueinander am Kabelsatz positioniert werden, wobei eine gegenseitige Isolierung der Verbindungsstellen durch die Ausgestaltung der Positioniereinrichtung gewährleistet ist.

Eine besonders einfache Handhabbarkeit wird erreicht, wenn gemäß einer besonders bevorzugten Ausführungsform der Erfindung der Träger am Kabelsatz festklemmbar ist. Der Träger kann als auf den Kabelsatz steckbarer Reiter ausgebildet sein.

In einer weiteren besonders bevorzugten Ausgestaltung der Erfindung ist der Träger ringförmig ausgebildet. Dabei kann der Träger als offener und insbesondere geschlitzter Ring vorgesehen sein. Hierdurch kann die Positioniereinrichtung auf denkbar einfache Weise über den Kabelsatz geschoben bzw. auf den Kabelsatz aufgesteckt werden.

Der Durchmesser des ringförmigen Trägers ist vorzugsweise derart an die Abmessungen des jeweiligen Kabelsatzes angepasst, dass ein sicherer, gegen axiale Relativbewegungen gesicherter Klemmsitz der Positioniereinrichtung auf dem Kabelsatz gewährleistet ist.

Des Weiteren wird vorgeschlagen, dass die Halteeinrichtung - bei am Kabelsatz fixiertem Träger - auf einer radial vom Kabelsatz weg weisenden Außenseite des Trägers angeordnet ist.

Wenn der Träger mehrere Halteeinrichtungen aufweist, ist bevorzugt vorgesehen, dass die Halteeinrichtungen in Umfangsrichtung des Trägers verteilt angeordnet sind. Auf diese Weise kann eine besonders vorteilhafte, stern- oder radförmige Ausgestaltung der Positioniereinrichtung realisiert werden, bei der die Halteeinrichtungen auf der Außenseite des Trägers angeordnet sind und sich - bei am Kabelsatz fixiertem Träger - vom Kabelsatz weg erstrecken bzw. vom Kabelsatz weg weisen. Hierdurch wird bei minimalem Platzbedarf für die erfindungsgemäße Positioniereinrichtung eine sichere und zuverlässige Positionierung sowie gegenseitige Isolierung der einzelnen Verbindungsstellen erzielt.

Gemäß einer weiteren bevorzugten Ausgestaltung der Erfindung ist die Halteeinrichtung derart ausgebildet, dass die Verbindungsstelle an der Halteeinrichtung festgeklemmt werden kann. Auf zusätzliche Befestigungsmittel zur Fixierung der Verbindungsstellen an der Positioniereinrichtung und damit am Kabelsatz kann somit in vorteilhafter Weise verzichtet werden.

Ferner ist vorzugsweise vorgesehen, dass die Halteeinrichtung als in axialer Richtung zumindest einseitig offene Haltekammer zur Aufnahme der Verbindungsstelle ausgebildet ist. Die Haltekammer kann als Klemmkammer ausgebildet sein, in der die jeweilige Verbindungsstelle festgeklemmt werden kann.

Hierzu kann die Haltekammer wenigstens eine elastisch auslenkbare Haltelasche aufweisen, die durch Einführen der Verbindungsstelle in die Haltekammer nach innen wegdrückbar ist und die eine in der Haltekammer positionierte Verbindungsstelle klemmfixierend beaufschlagt. Die Verbindungsstelle braucht somit lediglich in die Haltekammer eingedrückt zu werden, wobei dies zumindest prinzipiell sowohl vor als auch nach der Befestigung des Trägers am Kabelsatz erfolgen kann.

In einer bevorzugten Ausführungsform weist die Positioniereinrichtung im Bereich der Halteeinrichtung eine radiale Stärke von weniger als 10 mm, bevorzugt von weniger als 5 mm und insbesondere bevorzugt von etwa 3 bis 4 mm auf. Die radiale Wanddicke des Trägers beträgt bevorzugt etwa 1 mm. Die Halteeinrichtung weist vorzugsweise eine radiale Höhe von etwa 2 bis 4 mm und bevorzugt von etwa 3 mm auf.

Hierdurch werden der Materialverbrauch für die Positionierung der Verbindungsstellen sowie das Gewicht und die radialen Abmessungen des Kabelsatzes minimiert.

Des Weiteren ist es gemäß einer Ausführungsform der Erfindung bevorzugt, dass die Positioniereinrichtung einstückig ausgebildet ist. Alternativ können die Halteeinrichtung einerseits und der Träger andererseits als separate und miteinander koppelbare Bauteile vorgesehen sein, wobei die Art und Weise der Kopplung grundsätzlich beliebig und z.B. als Rast-, Steck- oder Clipsverbindung ausgestaltet sein kann. Das bevorzugte Material für die Positioniereinrichtung ist Kunststoff.

Die der Erfindung zugrunde liegende Aufgabe wird zum anderen durch ein Verfahren mit den Merkmalen des unabhängigen Verfahrensanspruchs 23 und insbesondere dadurch gelöst, dass zumindest eine zwischen mehreren Leitungen des Kabelsatzes gebildete Verbindungsstelle am Kabelsatz fixiert wird, und dass der Kabelsatz im Bereich der Verbindungsstelle derart mit einer Abdichtung versehen wird, dass die am Kabelsatz fixierte Verbindungsstelle vollständig von der Abdichtung umgeben und insbesondere in die Abdichtung eingebettet ist.

Erfindungsgemäß wird eine entsprechend dem jeweiligen Anwendungszweck ausgebildete Abdichtung dazu genutzt, gleichzeitig die Verbindungsstelle optimal vor äußeren Einflüssen wie insbesondere Feuchtigkeit zu schützen. Der Kabelsatz braucht lediglich derart ausgelegt zu werden, dass die Verbindungsstelle an eine Position längs des Kabelsatzes gelegt werden kann, an der die Abdichtung benötigt wird. Zusätzlich zu dem ohnehin erforderlichen Vorsehen der Abdichtung braucht erfindungsgemäß lediglich die Verbindungsstelle am Kabelsatz fixiert zu werden.

Die Fixierung der Verbindungsstelle am Kabelsatz erfolgt beispielsweise einfach durch ein herkömmliches Klebeband. Diese Variante ist besonders vorteilhaft in Fällen, in denen an einer bestimmten Position oder in einem bestimmten Bereich längs des Kabelsatzes lediglich eine einzige Verbindungsstelle vorhanden ist, da dann auf die Relativpositionen mehrerer Verbindungsstellen untereinander nicht geachtet zu werden braucht.

Gemäß einer besonders bevorzugten Ausführung des erfindungsgemäßen Verfahrens ist vorgesehen, dass wenigstens ein Träger am Kabelsatz fixiert wird, dass die vor oder nach dem Fixieren des Trägers am Kabelsatz hergestellte Verbindungsstelle mittels einer Halteeinrichtung des Trägers in einer vorgegebenen Position am Träger fixiert wird, und dass der Kabelsatz im Bereich der Halteeinrichtung derart mit der Abdichtung versehen wird, dass zumindest die am Träger fixierte Verbindungsstelle vollständig von der Abdichtung umgeben und insbesondere in die Abdichtung eingebettet ist.

Hierbei erfolgt die Abdichtung der Verbindungsstellen dadurch, dass die Verbindungsstellen zunächst mittels eines am Kabelsatz fixierbaren Trägers sowie einer Halteeinrichtung des Trägers in einer vorgegebenen Position relativ zum Kabelsatz fixiert werden und anschließend die Anordnung aus Kabelsatz, Träger, Halteeinrichtung sowie Verbindungsstelle mit der Abdichtung versehen wird.

In einer besonders bevorzugten Ausführung des erfindungsgemäßen Verfahrens wird die Abdichtung durch Umschäumen der insbesondere mittels einer Halteeinrichtung eines am Kabelsatz fixierten Trägers fixierten Verbindungsstelle an den Kabelsatz angeformt. Bevorzugt wird die Abdichtung als Tülle, Durchführung, Stopfen, Röhre oder Hülse ausgebildet.
Eine derartige Abdichtung wird auch als "grommet" bezeichnet.

Hierdurch macht sich die Erfindung in vorteilhafter Weise den Umstand zu Nutzen, dass insbesondere im Bereich des Fahrzeugbaus in Verbindung mit Kabelsätzen bzw. Kabelbäumen zunehmend geschäumte Abdichtungen insbesondere in Form von Tüllen, Durchführungen, Stopfen, Röhren oder Hülsen verwendet werden, um Durchgangsöffnungen in Bauteilen des Fahrzeugs, durch welche der Kabelsatz bzw. Kabelbaum hindurchgeführt werden muss, gegen den Durchtritt von Feuchtigkeit und anderen äußeren Einflüssen abzudichten. Übergänge zwischen Nassbereichen und Trockenbereichen eines Fahrzeugs sind beispielsweise in der Fahrzeug-Stirnwand ausgebildet, die den Fahrzeuginnenraum vom Motorraum trennt.

Bisher befanden sich die abzudichtenden Verbindungsstellen an von den Übergängen zwischen Nass- und Trockenbereichen entfernten Positionen am Kabelsatz, so dass zur Abdichtung von insbesondere in den Nassbereichen gelegenen Verbindungsstellen spezielle, aufwändige Maßnahmen getroffen werden mussten. Erfindungsgemäß kann auf derartige Zusatzmaßnahmen verzichtet werden, wenn gemäß einer besonders bevorzugten Ausführungsform die Abdichtung gleichzeitig dasjenige Bauteil ist, mit dem der Kabelsatz durch eine Durchtrittsöffnung, die z.B. in einer Fahrzeugstirnwand ausgebildet ist, hindurchgeführt wird. Dadurch erfolgt die Abdichtung der Verbindungsstellen gewissermaßen automatisch durch eine ohnehin zum Abdichten der Durchtrittsöffnung erforderliche Abdichtung.

Die Erfindung betrifft außerdem einen Kabelsatz, der wenigstens eine erfindungsgemäße Positioniereinrichtung aufweist, wie sie beispielsweise vorstehend erläutert wurde. Ferner betrifft die Erfindung ein Verfahren zur Herstellung von Kabelsätzen, bei dem ein Abdichtverfahren zur Anwendung kommt, wie es z.B. vorstehend beschrieben wurde.

Bevorzugte Ausführungsformen der Erfindung sind außerdem in den Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1a: eine Ausführungsform einer erfindungsgemäßen Positioniereinrichtung an einem Kabelsatz, wobei die Positioniereinrichtung gegenüber dem Kabelsatz stark vergrößert dargestellt ist,
- Fig. 1b: einen vergrößerten Ausschnitt von Fig. 1a zur Erläuterung einer Halteeinrichtung der erfindungsgemäßen Positioniereinrichtung,
- Fig. 2: schematisch im Querschnitt einen mit einer erfindungsgemäßen Positioniereinrichtung sowie einer Abdichtung versehenen Kabelsatz,
- Fig. 3a: eine erfindungsgemäße Positioniereinrichtung mit daran fixierten Verbindungsstellen zwischen elektrischen Leitungen unter Weglassung des übrigen Kabelsatzes, und
- Fig. 3b: einen erfindungsgemäßen Kabelsatz mit einer eine erfindungsgemäße Positioniereinrichtung umgebenden Abdichtung.

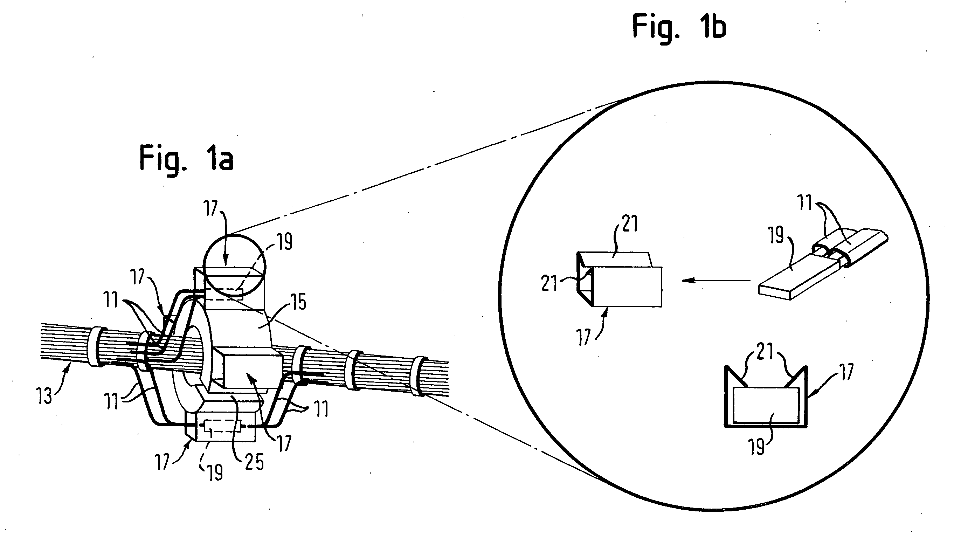

Die Positioniereinrichtung der Erfindung gemäß Fig. 1a und 1b umfasst einen offenen, mit einem Schlitz 25 versehenen, ringförmigen Träger 15, der auf einem eine Vielzahl einzelner Leitungen 11 umfassenden Kabelsatz 13 eines Kraftfahrzeugs aufgesteckt ist und an seiner radial vom Kabelsatz 13 weg weisenden Außenseite mit in diesem Ausführungsbeispiel vier in Umfangsrichtung gleichmäßig verteilt angeordneten Halteeinrichtungen 17 versehen ist. Die Positioniereinrichtung ist einstückig ausgebildet und aus Kunststoff hergestellt.

Die Halteeinrichtungen 17 sind - vgl. insbesondere Fig. 1b - als Halteoder Klemmkammern für Verbindungsstellen 19 ausgebildet, an denen mehrere Leitungen 11 gleichen Potentials z.B. durch Ultraschallschweißen, Widerstandsschweißen oder Crimpen an von der Isolierung befreiten Endbereichen miteinander verbunden sind. Die Klemmkammern 17 sind in axialer Richtung offen und an ihrer radial nach außen weisenden Seite mit Haltelaschen 21 versehen. Wenn eine Verbindungsstelle 19 in radialer Richtung von außen in die Klemmkammer 17 hineingedrückt wird, geben die Haltelaschen 21 nach und beaufschlagen die in ihrer Sollposition in der Klemmkammer 17 befindliche Verbindungsstelle 19 mit einer Haltekraft derart, dass eine sichere Klemmfixierung der Verbindungsstelle 19 in der Kammer 17 erzielt wird und die Verbindungsstelle 19 sowohl in radialer Richtung als auch in axialer Richtung an der erfindungsgemäßen Positioniereinrichtung und damit am Kabelsatz 13 festgehalten wird.

Die obere Kammer 17 in Fig. 1a dient als sogenannte Endhaltekammer, in welche die miteinander verbundenen Leitungen 11 lediglich von einer Seite hineingeführt sind. Die untere Kammer 17 in Fig. 1a dient dagegen als Durchgangskammer, in die von beiden Seiten Leitungen 11 eintreten.

Ob eine Kammer 17 der erfindungsgemäßen Positioniereinrichtung als End- oder Durchgangskammer dient, hängt von den jeweiligen Umständen und dem Verlauf der miteinander zu verbindenden Leitungen 11 im Fahrzeug und im Kabelsatz 13 ab. Die Ausgestaltung der Kammern 17 stellt sicher, dass jede Kammer 17 sowohl als End- als auch als Durchgangskammer dienen kann, wodurch ein Höchstmaß an Flexibilität erreicht wird.

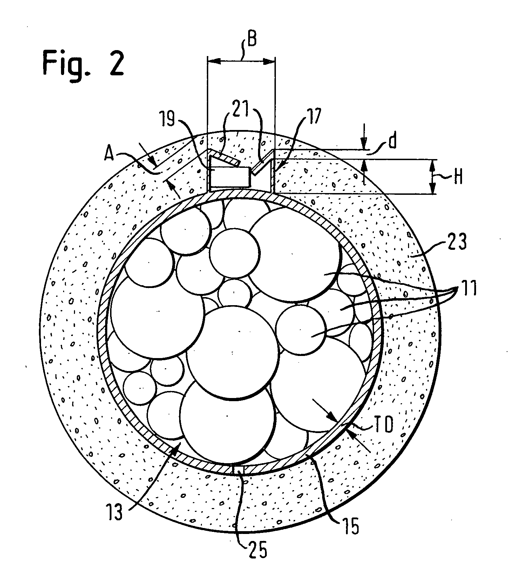

Fig. 2 zeigt im Querschnitt einen erfindungsgemäßen Kabelsatz 13, der eine Vielzahl von elektrischen Leitungen 11 führt und auf den eine erfindungsgemäße Positioniereinrichtung geklemmt ist, die einen ringförmigen, mit einem Schlitz 25 versehenen Träger 15 sowie eine auf der radialen Außenseite des Trägers 15 angeordnete, einstückig mit dem Träger 15 ausgebildete Haltekammer 17 umfasst, in der eine Verbindungsstelle 19 zwischen zwei oder mehr Leitungen 11 angeordnet und durch Klemmlaschen 21 der Halteeinrichtung 17 klemmfixierend gehalten ist.

Fig. 2 zeigt insbesondere, dass die Haltekammer 17 bzw. die Haltelaschen 21 derart ausgebildet sind, dass die Verbindungsstelle 19 auch bei außermittiger Anordnung in der Haltekammer 17 in zuverlässiger Weise festgehalten wird.

In dem gezeigten Ausführungsbeispiel beträgt die Wandstärke TD des Trägers 15 etwa 1 mm, während die radiale Höhe H der Haltekammer 17 etwa 3 mm und die Stärke d der Haltelaschen 21 etwa 1 mm beträgt. Die Haltekammer 17 weist eine Breite B von etwa 6 mm auf und ist zur Aufnahme von Verbindungsstellen 19 mit einer Dicke zwischen etwa 1 mm bis 2,9 mm sowie einer Breite zwischen etwa 1 mm bis 5,7 mm ausgelegt. Diese Abmessungen sind lediglich beispielhaft und können je nach Anwendungsfall variieren.

Der Kabelsatz 13 ist im Bereich der erfindungsgemäßen Positioniereinrichtung 15, 17 mit einer Abdichtung in Form einer Tülle 23 umgeben, die durch Umschäumen der Positioniereinrichtung 15, 17 an den Kabelsatz 13 angeformt worden ist. Die Wandstärke der Tülle 23 im Bereich der Halteeinrichtung 17 ist derart gewählt, dass die Halteeinrichtung 17 mit dem Material der Tülle 23 in einer Abdeckstärke von etwa 2 mm bedeckt ist.

Auf diese Weise ist bei dem erfindungsgemäßen Kabelsatz 13 die mittels der erfindungsgemäßen Positioniereinrichtung 15, 17 positionierte und fixierte Verbindungsstelle 19 vollständig in die Abdichttülle 23 eingebettet und somit optimal vor äußeren Einflüssen, insbesondere vor Feuchtigkeit, geschützt.

Obwohl es grundsätzlich möglich ist, dass eine erfindungsgemäße Positioniereinrichtung lediglich eine Halteeinrichtung 17 aufweist, sind in bevorzugten Ausführungsformen mehrere in Umfangsrichtung verteilt angeordnete Halteeinrichtungen 17 vorgesehen, wie es z.B. in Fig. 1a gezeigt ist. In Fig. 2 sind lediglich zur Vereinfachung der Darstellung die übrigen Halteeinrichtungen 17 weggelassen worden. Letztlich hängt die Zahl der an einem Träger 15 vorgesehenen Halteeinrichtungen 17 vom jeweiligen Anwendungsfall ab.

Die Anzahl von einzelnen Leitungen 11, die an einer Verbindungsstelle 19 miteinander verbunden werden, ist grundsätzlich beliebig. Ferner können abweichend von den Darstellungen in Fig. 1a, 1b und Fig. 2 auch jeweils mehrere Verbindungsstellen 19 mittels einer einzigen Halteeinrichtung 17 am Träger 15 und damit am Kabelsatz 13 fixiert werden.

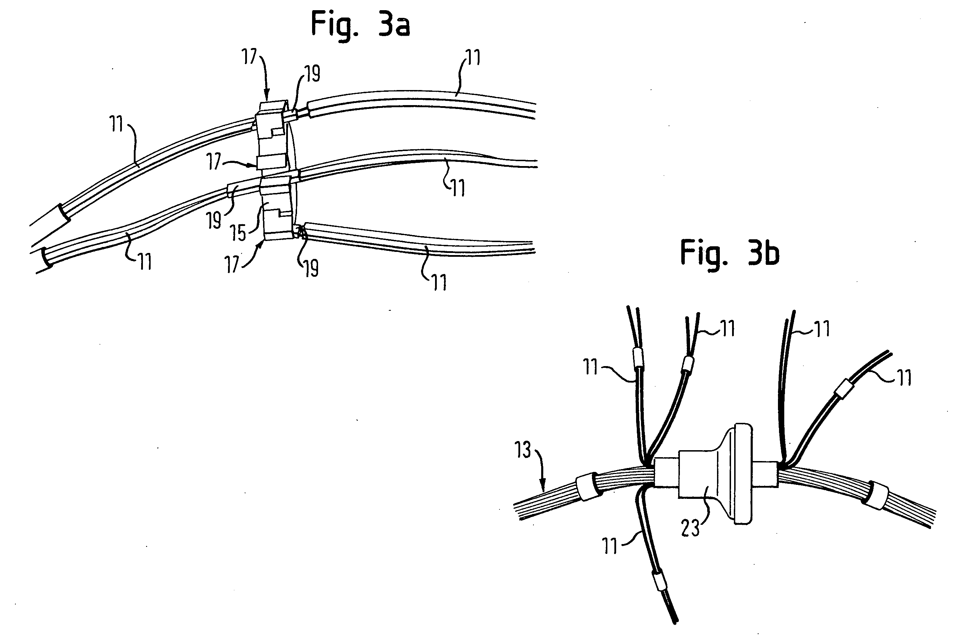

Fig. 3a zeigt eine erfindungsgemäße Positioniereinrichtung mit einem ringförmigen Träger 15, der mehrere Haltekammern 17 aufweist. In jeder Haltekammer 17 ist eine Verbindungsstelle 19 angeordnet, wobei die beiden oberen Halteeinrichtungen 17 jeweils als Durchgangskammern ausgebildet sind und eine insgesamt sechs Leitungen 11, von denen jeweils drei von einer Seite herangeführt sind, miteinander verbindende Verbindungsstelle 19 fixieren, während die untere, als Endkammer dienende Halteeinrichtung 17 eine Verbindungsstelle zwischen drei von lediglich einer Seite herangeführte Leitungen 11 fixiert.

Zur Vereinfachung der Darstellung ist in Fig. 3a der übrige Kabelsatz, auf den die erfindungsgemäße Positioniereinrichtung mit dem Ringträger 15 aufgesteckt wird, nicht gezeigt.

Bei der Ausführungsform der erfindungsgemäßen Positioniereinrichtung von Fig. 3a sind der Träger 15 und die Halteeinrichtungen 17 nicht einstückig miteinander ausgebildet, sondern die Halteeinrichtungen 17 sind in Form von separaten Bauteilen vorgesehen, die mit dem Träger 15 gekoppelt werden können, wobei die hierfür vorgesehene Verbindung grundsätzlich in beliebiger Art und Weise und z.B. als Steck-, Rast- oder ClipsVerbindung ausgestaltet sein kann. Dieser modulare Aufbau der Positioniereinrichtung gestattet es, dass jeweils nur die benötigte Anzahl von Halteeinrichtungen 17 mit dem Träger 15 gekoppelt zu werden braucht.

Fig. 3b zeigt den fertigen Kabelsatz 13, an den eine Abdichttülle 23 angeformt ist, welche die in Fig. 3a gezeigte Positioniereinrichtung vollständig umgibt und dadurch die einzelnen Verbindungsstellen 19 perfekt vor äußeren Einflüssen wie insbesondere Feuchtigkeit schützt. Zur Verdeutlichung sind in Fig. 3b die einzelnen Leitungen 11, die durch die drei mittels der Positioniereinrichtung 15, 17 am Kabelsatz 13 fixierten Verbindungsstellen 19 miteinander verbunden werden, vom Kabelsatz 13 abstehend gezeigt. Grundsätzlich kann die Abzweigung bzw. Eingliederung dieser Leitungen 11 jeweils in einer beliebigen Entfernung von der Abdichttülle 23 erfolgen.

Die Abdichttülle 23 dient zur abdichtenden Durchführung des Kabelsatzes 13 durch eine Durchtrittsöffnung in einem Kraftfahrzeugbauteil, z.B. durch eine den Fahrzeuginnenraum vom Motorraum trennende Fahrzeugstirnwand. Hierdurch erfüllt die Abdichttülle 23 in vorteilhafter Weise eine Doppelfunktion, indem sie den Trockenbereich vor Feuchtigkeit aus dem Nassbereich schützt und gleichzeitig für die Abdichtung der Verbindungsstellen 19 sorgt.

Zum Abdichten der Verbindungsstellen 19 und somit zur Herstellung eines erfindungsgemäßen Kabelsatzes werden - vgl. insbesondere Fig. 3a und 3b - zunächst die jeweils erforderlichen Verbindungsstellen 19 zwischen den Leitungen 11 z.B. durch Ultraschallschweißen, Widerstandsschweißen oder Crimpen hergestellt. Anschließend werden die Verbindungsstellen 17 in den Halteeinrichtungen 17 der erfindungsgemäßen Positioniereinrichtung fixiert. Das Aufstecken des Trägers 15 auf den Kabelsatz 13 sowie - bei einem modularen Aufbau - das Zusammensetzen der Positioniereinrichtung durch Koppeln der Halteeinrichtungen 17 mit dem Träger 15 kann dabei entweder vor oder nach der Herstellung der Verbindungsstellen 19 erfolgen.

Wenn die Verbindungsstellen 19 mittels der Positioniereinrichtung am Kabelsatz 13 fixiert sind, wird die Positioniereinrichtung umschäumt, um eine Abdichtung 23 mit der jeweils erforderlichen äußeren Form herzustellen. Die bevorzugte Ausgestaltung der erfindungsgemäßen Positioniereinrichtung mit radial von einem ringförmigen Träger 15 abstehenden Halteeinrichtungen 17 sorgt dabei für eine innige form- und kraftschlüssige Verbindung zwischen der Positioniereinrichtung 15, 17 und der Abdichtung 23.

### Bezugszeichenliste

- 11: Leitung
- 13: Kabelsatz
- 15: Träger
- 17: Halteeinrichtung
- 19: Verbindungsstelle, Splice
- 21: Haltelasche
- 23: Abdichtung
- 25: Schlitz

- TD: Wanddicke des Trägers
- H: Höhe der Halteeinrichtung
- d: Stärke der Haltelaschen
- B: Breite der Halteeinrichtung
- A: Abdeckstärke

## Patentansprüche

1. Positioniereinrichtung für Leitungen (11) in Kabelsätzen (13), insbesondere für elektrische Leitungen in Kabelsätzen für Kraftfahrzeuge, mit wenigstens einem an einem Kabelsatz (13) fixierbaren Träger (15), der zumindest eine Halteeinrichtung (17) aufweist, mit der wenigstens eine zwischen mehreren Leitungen (11) des Kabelsatzes (13) hergestellte Verbindungsstelle (19) in einer vorgegebenen Position am Träger (15) fixierbar ist.

2. Positioniereinrichtung nach Anspruch 1,
**dadurch gekennzeichnet,**
**dass** der Träger (15) am Kabelsatz (13) festklemmbar ist.

3. Positioniereinrichtung nach Anspruch 1 oder 2,
**dadurch gekennzeichnet,**
**dass** der Träger (15) als auf dem Kabelsatz (13) steckbarer Reiter ausgebildet ist.

4. Positioniereinrichtung nach einem der vorhergehenden Ansprüche,
**dadurch gekennzeichnet,**
**dass** der Träger (15) ringförmig ausgebildet ist.

5. Positioniereinrichtung nach einem der vorhergehenden Ansprüche,
**dadurch gekennzeichnet,**
**dass** der Träger (15) als offener und insbesondere geschlitzter Ring ausgebildet ist.

6. Positioniereinrichtung nach einem der vorhergehenden Ansprüche,
**dadurch gekennzeichnet,**
**dass** die Halteeinrichtung (17) einstückig mit dem Träger (15) ausgebildet ist.

7. Positioniereinrichtung nach einem der Ansprüche 1 bis 5,
**dadurch gekennzeichnet,**
**dass** die Halteeinrichtung (17) einerseits und der Träger (15) andererseits als separate und miteinander koppelbare Bauteile vorgesehen sind.

8. Positioniereinrichtung nach einem der vorhergehenden Ansprüche,
**dadurch gekennzeichnet,**
**dass** die Halteeinrichtung (17) bei am Kabelsatz (13) fixiertem Träger (15) auf einer radial vom Kabelsatz (13) weg weisenden Außenseite des Trägers (15) angeordnet ist.

9. Positioniereinrichtung nach einem der vorhergehenden Ansprüche,
**dadurch gekennzeichnet,**
**dass** der Träger (15) mehrere gegeneinander isolierte und insbesondere räumlich voneinander getrennte Halteeinrichtungen (17) aufweist.

10. Positioniereinrichtung nach Anspruch 9,
**dadurch gekennzeichnet,**
**dass** die Halteeinrichtungen (17) in Umfangsrichtung des Trägers (15) verteilt angeordnet sind.

11. Positioniereinrichtung nach einem der vorhergehenden Ansprüche,
**dadurch gekennzeichnet,**
**dass** sie stern- oder radförmig mit bei am Kabelsatz (13) fixiertem Träger (15) vom Kabelsatz (13) weg weisenden Halteeinrichtungen (17) ausgebildet ist.

12. Positioniereinrichtung nach einem der vorhergehenden Ansprüche,
**dadurch gekennzeichnet,**
**dass** die Verbindungsstelle (19) an der Halteeinrichtung (17) festklemmbar ist.

13. Positioniereinrichtung nach einem der vorhergehenden Ansprüche,
**dadurch gekennzeichnet,**
**dass** die Halteeinrichtung (17) als in axialer Richtung zumindest einseitig offene Haltekammer zur Aufnahme der Verbindungsstelle (19) ausgebildet ist.

14. Positioniereinrichtung nach Anspruch 13,
**dadurch gekennzeichnet,**
**dass** die Haltekammer (17) wenigstens eine elastisch auslenkbare Haltelasche (21) aufweist, die durch Einführen der Verbindungsstelle (19) in die Haltekammer (17) nach innen wegdrückbar ist und die eine in der Haltekammer (17) positionierte Verbindungsstelle (19) klemmfixierend beaufschlagt.

15. Positioniereinrichtung nach einem der vorhergehenden Ansprüche,
**dadurch gekennzeichnet,**
**dass** sie im Bereich der Halteeinrichtung (17) eine radiale Stärke von weniger als 10 mm, bevorzug von weniger als 5 mm und insbesondere bevorzugt von etwa 3 bis 4 mm aufweist.

16. Positioniereinrichtung nach einem der vorhergehenden Ansprüche,
**dadurch gekennzeichnet,**
**dass** der Träger (15) eine radiale Wanddicke von etwa 1 mm aufweist.

17. Positioniereinrichtung nach einem der vorhergehenden Ansprüche,
**dadurch gekennzeichnet,**
**dass** die Halteeinrichtung (17) eine radiale Höhe von etwa 2 bis 4 mm und bevorzugt von etwa 3 mm aufweist.

18. Positioniereinrichtung nach einem der vorhergehenden Ansprüche,
**dadurch gekennzeichnet,**
**dass** sie einstückig ausgebildet und insbesondere aus Kunststoff hergestellt ist.

19. Kabelsatz mit wenigstens einer Positioniereinrichtung (15, 17) nach einem der vorhergehenden Ansprüche.

20. Kabelsatz nach Anspruch 19,
**dadurch gekennzeichnet,**
**dass** er im Bereich der Positioniereinrichtung (15, 17) mit einer Abdichtung (23) insbesondere in Form einer Tülle, einer Durchführung, eines Stopfens, einer Röhre oder einer Hülse versehen ist.

21. Kabelsatz nach Anspruch 20,
**dadurch gekennzeichnet,**
**dass** zumindest die Halteeinrichtung (17) der Positioniereinrichtung (15, 17) vollständig von der Abdichtung (23) umgeben und insbesondere in die Abdichtung (23) eingebettet ist.

22. Kabelsatz nach Anspruch 20 oder 21,
**dadurch gekennzeichnet,**
**dass** die Abdichtung (23) durch Umschäumen zumindest eines Teils der Positioniereinrichtung (15, 17) hergestellt ist.

23. Verfahren zum Abdichten von Verbindungsstellen (19), die jeweils zwischen mehreren Leitungen (11) eines Kabelsatzes (13), insbesondere zwischen elektrischen Leitungen von Kabelsätzen für Kraftfahrzeuge, hergestellt werden, bei dem
- zumindest eine zwischen mehreren Leitungen (11) des Kabelsatzes (13) gebildete Verbindungsstelle (19) am Kabelsatz (13) fixiert wird, und
- der Kabelsatz (13) im Bereich der Verbindungsstelle (19) derart mit einer Abdichtung (23) versehen wird, dass die am Kabelsatz (13) fixierte Verbindungsstelle (19) vollständig von der Abdichtung (23) umgeben und insbesondere in die Abdichtung (23) eingebettet ist.

24. Verfahren nach Anspruch 23,
**dadurch gekennzeichnet,**
- **dass** wenigstens ein Träger (15) am Kabelsatz (13) fixiert wird,
- **dass** die vor oder nach dem Fixieren des Trägers (15) am Kabelsatz (13) hergestellte Verbindungsstelle (19) mittels einer Halteeinrichtung (17) des Trägers (15) in einer vorgegebenen Position am Träger (15) fixiert wird, und
- **dass** der Kabelsatz (13) im Bereich der Halteeinrichtung (17) derart mit der Abdichtung (23) versehen wird, dass zumindest die am Träger (15) fixierte Verbindungsstelle (19) vollständig von der Abdichtung (23) umgeben und insbesondere in die Abdichtung (23) eingebettet ist.

25. Verfahren nach Anspruch 23 oder 24,
**dadurch gekennzeichnet,**
**dass** die Abdichtung (23) durch Umschäumen der Verbindungsstelle (19), insbesondere der mittels einer Halteeinrichtung (17) eines am Kabelsatz (13) fixierten Trägers (15) fixierten Verbindungsstelle (19), an den Kabelsatz (13) angeformt wird.

26. Verfahren nach einem der Ansprüche 23 bis 25,
**dadurch gekennzeichnet,**
**dass** die Abdichtung (23) als Tülle, Durchführung, Stopfen, Röhre oder Hülse ausgebildet wird.

27. Verfahren nach einem der Ansprüche 23 bis 26,
**dadurch gekennzeichnet,**
**dass** die Verbindungsstelle (19) zwischen den Leitungen (11) durch Ultraschallschweißen, Widerstandsschweißen oder Crimpen hergestellt wird.

28. Verfahren nach einem der Ansprüche 23 bis 27,
**dadurch gekennzeichnet,**
**dass** zum Fixieren der Verbindungsstelle (19) eine wenigstens einen Träger (15) und zumindest eine Halteeinrichtung (17) aufweisende Positioniereinrichtung nach einem der Ansprüche 1 bis 18 verwendet wird.

29. Verfahren zur Herstellung von Kabelsätzen (23) insbesondere für Kraftfahrzeuge, bei dem ein Verfahren nach einem der Ansprüche 23 bis 28 zur Anwendung kommt.
